Europäisches Patentamt

European Patent Office

Office européen des brevets

(19)

(11) Publication number: **0 134 632**

**A1**

(12) # EUROPEAN PATENT APPLICATION

(21) Application number: **84304119.5**

(22) Date of filing: **19.06.84**

(51) Int. Cl.⁴: **B 62 D 25/18**

(30) Priority: **22.06.83 GB 8316915**
**14.12.83 GB 8333341**

(43) Date of publication of application:
**20.03.85 Bulletin 85/12**

(84) Designated Contracting States:
**BE DE FR IT NL SE**

(71) Applicant: **DUNLOP LIMITED**
**Dunlop House Ryder Street St. James's**
**London SW1Y 6PX(GB)**

(72) Inventor: **Atkin, Howard Stuart**
**22 Longdon Drive Four Oaks**
**Sutton Coldfield West Midlands(GB)**

(74) Representative: **Moore, John Hamilton et al,**
**Group Patent Department Dunlop Limited 2 Parade**
**Sutton Coldfield West Midlands B72 1PF(GB)**

(54) Spray suppressor for vehicles.

(57) Fluid control means suitable for use as a vehicle spray suppressor comprises a receptor surface (10) against which fluid such as road surface water is arranged to impinge, a pair of transversely spaced outlet channels (11) provided at respective edge regions (12) of the receptor surface, and a receptor surface having a plurality of fluid collector formations which extend rectilinearly between said outlet channels (11) substantially at right angles thereto, and horizontal in normal use, so as to serve to direct to said outlet channels fluid impinging on the receptor surface, the collected fluid flowing from said outlet channels under the action of gravity.

FIG.1

EP 0 134 632 A1

Croydon Printing Company Ltd.

FLUID CONTROL MEANS

This invention relates to fluid control means and in particular, though not exclusively, to fluid control means suitable for use as a vehicle spray suppressor.

The spray generated by vehicles, especially heavy commercial vehicles, when travelling at speed on a wet road surface often can present a  substantial safety hazard particularly to the drivers of overtaking vehicles. The spray generated also has the undesirable effect of tending to accelerate the accumulation of road dirt on the vehicle body;  this is particularly undesirable in the case of vehicles operating in connection with certain retail trades and public services where the continuous presentation of a smart and clean appearance is considered important.

The spray generated by a vehicle wheel arises partly due to that water expelled sideways, transversely relative to the direction of movement, as a tyre passes over a wet surface, and partly due to water thrown up in a generally tangential direction from the road wheel towards a vehicle wheel arch or mudflap and from which the water issues sideways in the form of a fine spray.

The spray which issues from a wheel arch or mudflap is found, in contrast to that from between the tyre and road surface, to constitute the main safety hazard and have the greatest adverse effect on vehicle cleanliness. This arises because spray from water thrown against the wheel arch or mudflap is at a much greater height above the road surface than that from the water expelled sideways from between the tyre and road surface.

The safety hazard and cleanliness problems can therefore be substantially overcome if there is effective suppression of that spray due to water thrown up in the generally tangential direction from a road wheel.

A considerable number of devices have been proposed hitherto with the aim of achieving spray suppression but none have been adequately satisfactory and cost effective when put into day-to-day use.  Some of the known devices are found to give good suppression of spray when first installed on a vehicle, but the effectiveness becomes substantially reduced as road and other debris accumulates and thus blocks the fluid flow paths provided on or in the device when new. Routine cleaning to remove clogged debris can provide some solution to this difficulty but, apart from the time and cost involved, this operation is not entirely satisfactory because the necessary interval between cleaning operations cannot readily be predicted. If a vehicle has had to traverse even a short stretch of unmade or contaminated road the cleaning can be necessary within a very short time interval.

The present invention seeks to provide fluid control means effective in use as a vehicle spray suppressor to achieve good suppression of spray whilst also not being susceptible to clogging by debris.

In accordance with one aspect of the present invention fluid control means for use as a vehicle spray suppressor comprises a receptor surface against which in use fluid is arranged to impinge, and a pair of transversely spaced outlet channels provided at respective edge regions of the receptor surface, the receptor surface having a plurality of fluid collector formations which extend substantially rectilinearly relative to the receptor surface between said outlet channels in a direction substantially at right angles thereto and which in use serve to direct to said outlet channels fluid impinging on the receptor surface.

Preferably the collector formations of the receptor surface comprise channel formations each of which communicates with said transversely spaced outlet channels.

In consequence of the disposition of the collector formations substantially at right angles to the outlet channels, the distance which impinging water must flow across the receptor surface, along the channel formations defined by successive collector formations in order to reach the outlet channels is kept to a minimum and is less than if the collector formations were angled substantially relative to the direction of transverse spacing of said outlet channels.

It is further preferred that successive collector formations defining respective channel formations be spaced apart by a distance greater than 20 and more preferably greater than 50% but less than 200% of the height to which said collector formations extend from the receptor surface. More preferably said spacing is substantially equal to said height.

The area of the receptor surface between successive collector formations may be substantially smooth or may be provided with auxiliary spray suppression formations of a kind arranged to assist in dispersing sideways towards the outlet channels that fluid which impinges on the fluid control means in a direction generally perpendicular to the receptor surface.

The auxiliary spray suppression formations preferably extend from the receptor surface no more than 30%, and more preferably no more than 10%, of the height to which the neighbouring collector formations extend from the receptor surface thereby to minimise any tendency for debris to accumulate in the channel formations. Said formations preferably each extend in a continuous manner across the receptor surface so as to be less prone to clogging than formations which extend in a discontinuous manner across the receptor surface.

Preferably the collector formations define channel formations which in use extend generally horizontally between the transversely spaced outlet channels.

It is further preferred that in use of the fluid control means the outlet channels are arranged to extend at a substantial inclination to the horizontal over at least a part of their respective lengths so that water received in said channels from the receptor is able readily to flow along said channels under the action of gravity.

The fluid collector formations may be of a hollow nature and may be formed of material arranged to lie in a generally folded configuration.

The receptor surface may be substantially planar or curved, for example curved about an axis parallel to a vehicle wheel axis so as to conform to the shape of a vehicle wheel arch or to act as a wheel arch. The fluid control means may be of a flexible construction so as to permit ready deformation to conform to a required shape. The fluid control means, or at least the receptor surface thereof, may comprise part of the vehicle bodywork such as, for example, a vehicle mud wing, and may be formed integral therewith.

The receptor surface additionally or alternatively may be curved or otherwise shaped as considered in cross-section in a plane perpendicular to the direction in which the outlet channels extend. The surface may, for example, be of V-shape in cross-section with the apex region of the V-shape arranged in use to lie closer to the vehicle wheel than outlet channels positioned at the ends of the limbs of the V.

Embodiments of the present invention suitable for use as a vehicle spray suppressor will now be described, by way of example, with reference to the accompanying drawings in which:-

Figure 1 is a perspective view, part cut away, of a vehicle spray suppressor in accordance with the present invention;

Figure 2 shows in perspective the device of Figure 1 in situ relative to a vehicle road wheel;

Figure 3 is a cross-section on the line 3-3 of Figure 1;

Figure 4 is a cross-section on the line 4-4 of Figure 1;

Figures 5a to 5f show alternative profiles for the cross-section on the line 3-3 of Figure 1;

Figures 6a to 6c show profiles additional to those of Figures 5a to 5f;

Figures 7a to 7d show alternative cross-sections on the line 4-4 of Figure 1;

Figure 8 is a cross-sectional view, in a direction generally similar to that of Figure 6, of part of a vehicle spray suppressor in accordance with another aspect of the present invention;

Figure 9 shows the spray suppressor of Figure 8 deformed for attachment to a vehicle, and

Figures 10 and 11 respectively show in perspective alternative forms of receptor surface members.

A vehicle spray suppressor comprises a receptor surface member 10 and a pair of parallel transversely spaced outlet channels 11 provided respectively adjacent an opposed pair of edges 12 of the receptor member.

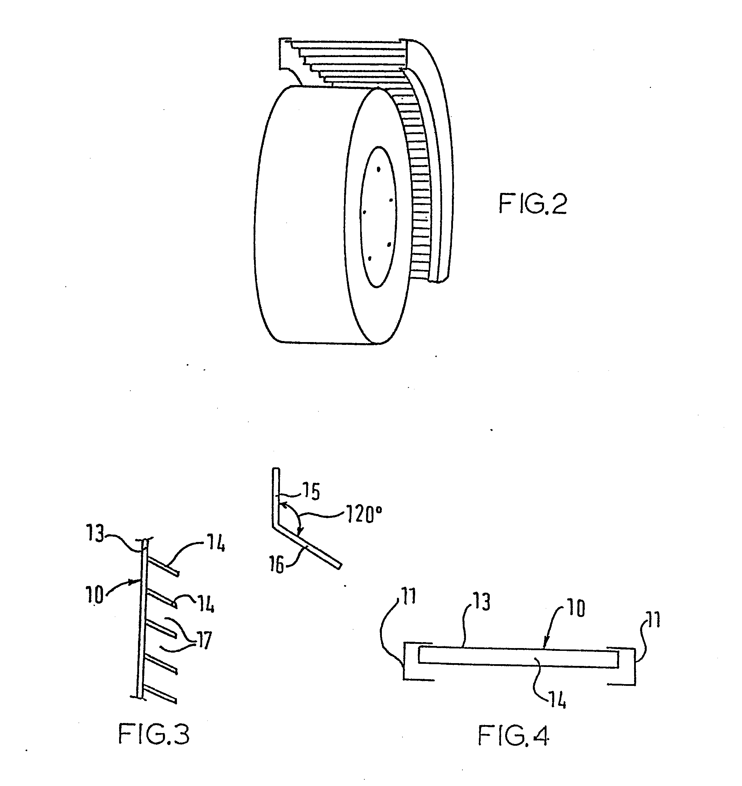

The receptor member comprises a backing sheet 13 (see Figure 3) of flexible material such as polyethylene to which is secured by means of adhesive a plurality of rubber strips 14 each of a cross-section as shown in-set on Figure 3. Each strip has in cross-section a short side 15 by means of which the strip is adhered to the backing sheet 13 and a longer side 16 the free end of which in use faces into the stream of water impinging on the receptor member.

A plurality of lengths of the strip 14 are adhered to the backing sheet 13 such that the backing sheet is substantially wholly covered by the short side portions 15 of the successive strips 14. The longer side portions 16 in consequence serve as dividers between successive parallel collector channels 17 formed over the surface of a backing sheet as shown in cross-section in Figure 3.

The orientation of the strips 14 is such that the collector channels 17 defined thereby extend in a direction perpendicular to the outlet channels 11.

The outlet channels are of a rectangular channel

6.

0134632

cross-section as shown in Figure 4 and are secured relative to the receptor member by adhesive acting between the backing sheet 13 of the receptor and an inner facing surface of one of the limbs of an outlet channel 11. The outlet channels and receptor member are secured together such that the extremities of the strips 14 are spaced from the base of the outlet channels 11, but each lie between the base of an outlet channel and its associated opening. The backing sheet 13 may be of a width equal to the length of each strip 14, as shown in Figure 4, or alternatively for ease of assembly may be slightly wider so as to extend at its edges to the base of the respective outlet channels 11.

The outlet channels 11 may be of substantially rigid material, or of a flexible material which permits the assembly of the outlet channels and receptor service to be curved about an axis parallel with the direction of the length of strips 14. In the case of outlet channels of a flexible nature it is, however, important that the channels are of sufficient stiffness to resist undue deformation due to the pressure of water flowing along the collector channels 17 of the receptor surface against the respective bases of the outlet channels 11.

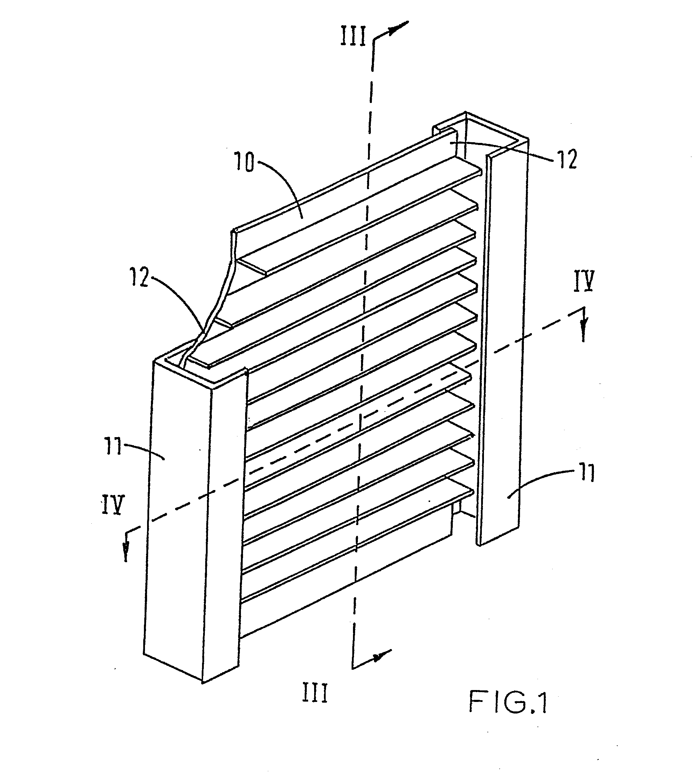

In the embodiment illustrated in Figures 1 to 4 the outlet channels are formed of a relatively rigid plastics material, such as polyethylene or polypropylene and rubber, which may have a distinctive finish or colour to blend with the livery of the vehicle. This plastics material is not readily deformable from a straight to a curved configuration and thus for applications in which the spray suppressor is to conform to a curved shape the outlet channels 11 should be preformed to the required curvature. The receptor surface nevertheless conveniently is formed of flexible material so that a preformed long length of receptor surface material may be cut to the required length and curved as appropriate for use with preformed outlet channels.

In the aforedescribed construction the rubber strips 14 are formed in such manner that the short and long portions 15,16 respectively lie at an angle of $120^{\circ}$ one relative to the other as shown inset in Figure 3. Typically alternative angles of between $90^{\circ}$ and $150^{\circ}$, more preferably between $115^{\circ}$ and $135^{\circ}$, may be used, an attempt in general being made to ensure that at least in the area of maximum impingement of water from the road wheel the longer portion of the blades in said region extend in a direction substantially parallel with the direction of impinging water. The length of the short and long portions of the blades may be varied; it is believed that for each portion lengths between 3 to 60 mm may be satisfactory. In the embodiment illustrated and which has been the subject of tests hereinafter described the short portion of the blades has a length in the order of 5 mm and the longer portion has a length in the order of 25 mm.

In respect of the outlet channels at the sides of the receptor surface, in the embodiment described above and the subject of the test results set forth hereinafter the sides of each channel have a spacing of up to 70 mm and a length of up to 50 mm.

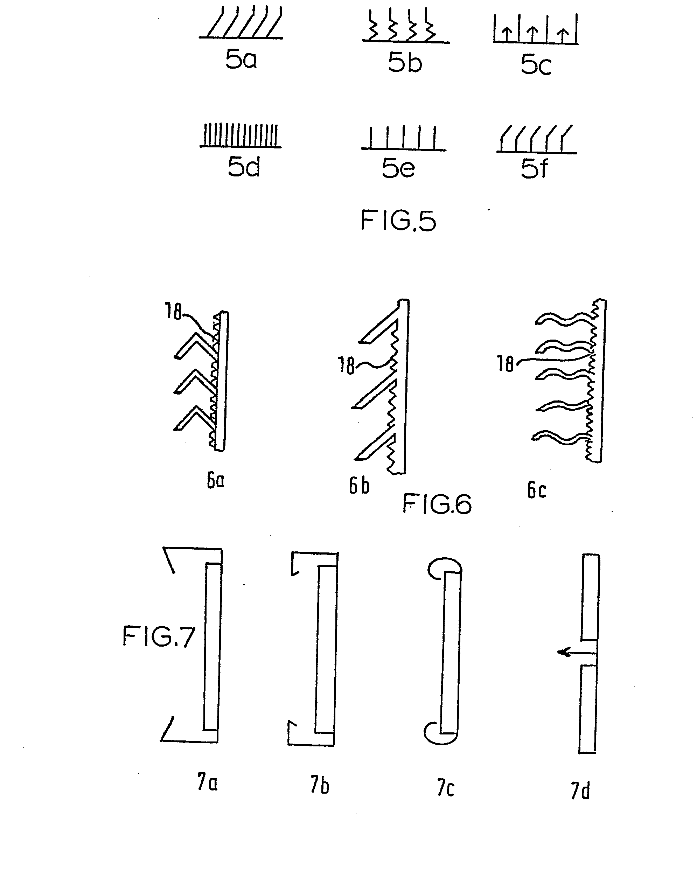

Alternative cross-sectional profiles for the rubber strips 14 as affixed to a backing sheet are shown in Figures 5a to f.

Forms 5d and 5e correspond in general terms with that described above and shown inset in Figure 3 except that the angle between the two portions of each strip is $90^{\circ}$. In 5d the shorter portions of each strip have a length half that shown in Figure 5e such that in 5d the channels are half the size of those in Figure 5e.

Figures 5a and 5f show modifications which are of a non re-entrant type. That is, impinging water is redirected before contacting the base of the receptor surface.

Figures 5b and 5c relate to further alternatives in which an even more tortuous path is presented to the impinging water.

Figures 6a, 6b and 6c show further alternative cross-sectional profiles for the receptor surface and which have in common the particular feature that that portion of each strip which is secured to the backing sheet 13 presents to the impinging water a relatively finely corrugated surface 18. These have been found to further assist in absorbing the kinetic energy of the impinging water and thereby minimise rebound and creation of spray.

In a further embodiment the rubber strips 14 and backing sheet 13 may be of an integral construction.

Two or more spray suppressors may be provided in side-by-side relationship, in which case a common member may serve to define at least in part one of the outlet channels for each of the neighbouring plurality of collector formations. This arrangement is particularly suitable for use with vehicles having, say, one pair of wheels mounted side-by-side.

Alternative cross-sectional arrangements for the outlet channels 11 are shown in Figures 7a to 7d, that of Figure 7d being a side-by-side arrangement of two spray suppressors.

If desired one of the outlet channels may be comprised by an existing vehicle valence.

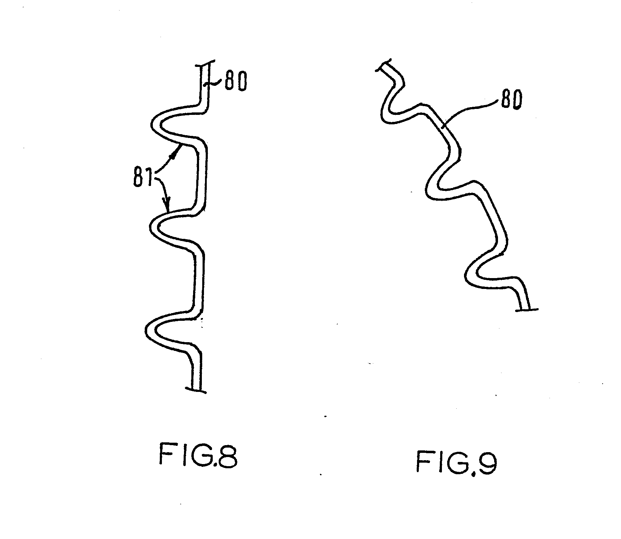

In the embodiment of the invention shown in cross-section in Figure 8 the receptor surface member is formed from a moulded sheet 80 of rubber which during moulding is formed with a series of folded portions 81 each of which serves to define a hollow fluid collector formation. By virtue of the hollow folded portions 81 the sheet 80 may readily be deformed to that curvature required of the spray suppressor in order to conform to the shape of an existing wheel arch, or to form a curved or otherwise selectively shaped wheel arch as shown in Figure 9.

A spray suppressor incorporating a receptor surface member of the kind shown in Figures 8 and 9 is particularly suitable for use between a pair of vehicle wheels one of which is positioned in front of the other as considered in the normal direction of vehicle movement.

The hollow folded portions 81 define a series of cavities which in use extend horizontally and can receive any water thrown in a forwards direction by the rearward of the two wheels while the other side of the receptor surface member receives that water thrown rearwards by the forward of the two wheels. The receptor surface member therefore is able to play a part in suppressing the generation of spray by water thrown up from the road surface by each of said wheels.

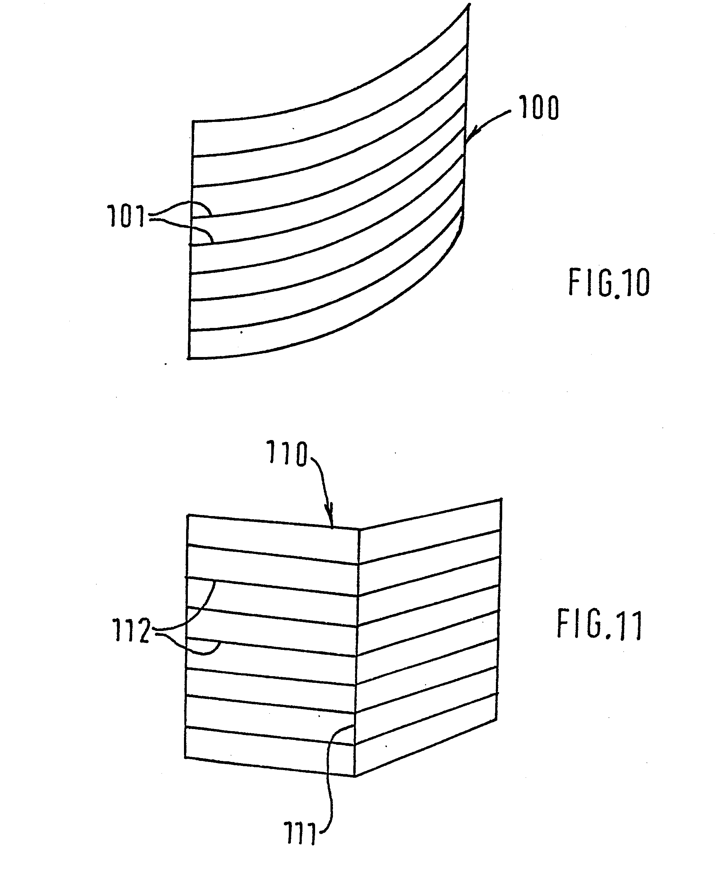

Figures 10 and 11 show two forms of non-planar receptor surface members for use in fluid control means in accordance with the present invention.

The member 100 of Figure 10 is of a part-cylindrical form, and in use in a vehicle spray suppressor the axis of curvature preferably is arranged to extend vertically or inclined to the vertical but perpendicular to the vehicle wheel axles. The member 110 of Figure 1 is of a V-shape in section and in use in a vehicle spray suppressor the apex line 111 is arranged to lie relative to the vehicle wheel axles in a direction such as that preferred for the axis of curvature of the part-cylindrical member 100.

The lines 101 and 112 of Figures 10 and 11 respectively indicate in diagrammatic form the positions of collector formations which extend rectilinearly over the respective surface members between the edges thereof.

It has earlier been described that a number of devices are known to have hitherto been proposed for use as vehicle spray suppressors. A number of these have required the use of receptor surfaces provided with channels but for none has it been an essential requirement that the channels should extend in use in a generally horizontal direction as specified by the present invention.

Tests have been conducted to demonstrate the relative performance of spray suppressors having channel formations extending on the one hand vertically and on the other hand horizontally. These tests have been conducted using receptor surfaces having the cross-sectional profiles shown in Figures 3 and 5a to 5f with the strips extending first vertically and then horizontally. In each case the receptor surface has been disposed between a pair of parallel vertically extending outlet channels 11. For an approximate comparison with the performance of a standard vehicle wheel-arch tests also were conducted against a flat metal plate arranged between said outlet channels.

A useful measure of the efficiency of a spray suppressor is obtained by determining the ratio of the volume of water impinging on the collector and that which may be regarded as having been properly collected by the suppressor without generation of spray. The latter quantity in the case of the tests conducted by the applicant has been ascertained by collecting that water which has fallen vertically primarily from the outlet channels 11 and also that from the receptor surface. The results of the tests are set forth below.

| Receptor Surface construction | % Efficiency | |
| | Receptor Surface blades extending vertically | Receptor Surface blades extending horizontally |
| --- | --- | --- |
| Blade of cross-section shown in Figure 3 | 26 | 73 |
| 5a | 23 | 77 |
| 5b | 28 | 73 |
| 5c | 22 | 76 |
| 5d | 25 | -- |
| 5e | 24 | -- |
| 5f | -- | 71 |
| Plain metal sheet | 9% | |

From the table it will be apparent that orientation of the receptor surface channel formations so as to extend in a generally horizontal direction results in the attainment of a substantially greater degree of collection than the use of vertically extending channels.

Visual inspection also shows that that spray which resulted from a spray suppressor in accordance with the present invention was substantially less intense and widespread than that from spray suppressor arrangements in which the channels extend vertically.

It is not an essential requirement of the present invention that the collector formations of the receptor surface be in the form of continuous and unapertured transversely extending blades such as have been shown in the accompanying Figure 1. The collector formations may, for example, be formed with apertures to permit a limited flow of water between successive channels. The essential requirement of the collector formations is that they facilitate, and preferably encourage, the impinging water to migrate laterally and generally directly towards the outlet channels along which the water can then drain clear of the receptor surface. Accordingly the resulting water flow pattern differs significantly and importantly from constructions in which the receptor surface comprises, in use, inclined or vertically extending channels. In these a proportion of the impinging water is directed upwards but as soon as the area immediately above the main point of impingement has become flooded the water will tend to fall down under the action of gravity into the impinging stream of further water from the vehicle wheel. In consequence there is a substantial accumulation of water and resulting air-water turbulence which is particularly conducive to the generation of substantial spray.

In use of the spray suppressor of the present invention the generally horizontally extending channels or like formations of the receptor surface will tend to become flooded but excess water is free to flow sideways, away from the main point of impingement of water, towards the outlet channels.

The transverse disposition of the outlet channels, which preferably are arranged to be spaced greater than the width of the vehicle wheel(s) from which water is being collected results in the collected water tending to fall on the road surface outside the immediate path of following wheels of the same vehicle. Therefore vehicle wheels is reduced and there is a corresponding reduction in the generation of spray from those wheels.

13.                                    0134632

CLAIMS:

1.    Fluid control means for use as a vehicle spray suppressor comprising a receptor surface against which in use fluid is arranged to impinge, and a pair of transversely spaced outlet channels provided at respective edge regions of the receptor surface characterised in that the receptor surface member (10) has a plurality of fluid collector formations (14) which extend substantially rectilinearly relative to the receptor surface between said outlet channels (11) in a direction substantially at right angles thereto and which in use serve to direct to said outlet channels fluid impinging on the receptor surface.

2.    Fluid control means according to Claim 1 characterised in that the collector formations (14) of the receptor surface define at least in part channel formations (17) each of which communicates with said transversely spaced outlet channels.

3.    Fluid control means according to any one of the preceding claims characterised in that successive collector formations (14) are spaced apart by a distance greater than 20% and more preferably greater than 45% of the height to which said collector formations extend from the receptor surface.

4.    Fluid control means according to claim 3 characterised in that successive collector formations are spaced by a distance less than twice of the height to which said collector formations extend from the receptor surface.

5.    Fluid control means according to any one of the preceding claims characterised in that the receptor surface is substantially smooth between successive collector formations.

6.    Fluid control means according to any one of the preceding claims characterised in that the collector formations (81) are of a hollow construction.

7.    Fluid control means according to claim 6 characterised in that a sheet of material (80) having a folded configuration forms said receptor surface and collector formations.

8.     Fluid control means according to any one of the preceding claims characterised in that at least some of said fluid collector formations lie at an angle in the range $30^{o}$ to $90^{o}$, more preferably in the range $45^{o}$ to $75^{o}$, relative to the receptor surface as considered in a plane parallel with an outlet channel and perpendicular to the receptor surface.

9.     Fluid control means according to any one of the preceding claims characterised in that the receptor surface (100) is non-planar.

10.    A vehicle having secured thereto fluid control means in accordance with any one of the preceding claims with the receptor surface thereof    arranged in normal use of the vehicle to be impinged by water issuing in a generally tangential direction from a  vehicle road wheel, characterised in that  the outlet channels (11) extend at a substantial inclination to the horizontal over at least a  part of their respective lengths and that the fluid collector formations (14) are arranged to extend in a horizontal direction.

JRB/JMT - TE.10257/10309

0134632

$^1/_5$

FIG.1

FIG.2

15

120°

16

13

14

10

14

17

FIG.3

11

13

10

11

14

FIG.4

5a

5b

5c

5d

5e

5f

FIG.5

18

6a

18

6b

FIG.6

18

6c

FIG.7

7a

7b

7c

7d

FIG.8

FIG.9

FIG.10

FIG.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 290 619 (GOODALL) * Figures 1-15 * | 1,2 | B 62 D 25/18 |
| A | | 5,6,10 | |
| Y | US-A-3 088 751 (BARRY et al.) * Figures 1-5 * | 1,2 | |
| A | | 8 | |
| A | DE-A-2 045 212 (MOSS) * Figures 1-9 * | 7,9 | |
| A | EP-A-0 074 844 (NETLON LTD et al.) | | |
| A | GB-A-1 447 327 (ARENHOLD) | | B 62 D 25/00 |

TECHNICAL FIELDS SEARCHED (Int. Cl. ³)

The present search report has been drawn up for all claims

| Place of search | Date of completion of the search | Examiner |
|---|---|---|
| BERLIN | 15-10-1984 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82